# EUROPEAN PATENT APPLICATION

(11) **EP 1 811 767 A1**
(43) Date of publication of application: **25.07.2007**
(21) Application number: 06300046.7
(22) Date of filing: 19.01.2006
(51) Int. Cl.: H04N 5/00, H04N 7/24

(54) **Enhanced digital video broadcast idle mode in wireless communication networks**

(71) Applicant: MOTOROLA, INC., Schaumburg, IL 60196 (US)
(72) Inventor: ALBORNA, Karine, 31100, TOULOUSE (FR); ABDESSELEM, Ouelid, 31000 - Toulouse (FR); MARTINIE, Celia, 31300, TOULOUSE (FR); PLACIARD, Edwin, 31000, TOULOUSE (FR)
(74) Representative: Delumeau, François Guy

(57) **Abstract**

A method in a digital video broadcast enabled wireless communication device (400) operating in idle mode including receiving a digital video broadcast program association table including program and corresponding program mapping table packet identifier information, and providing information in the received program association table about a subsequent program association table that has been modified but not yet received by the wireless communication device.

## Description

### FIELD OF THE DISCLOSURE

The present disclosure relates generally to wireless communications, and more particularly to digital video broadcast idle mode operation in wireless communication devices, for example, in cellular telephone handsets, corresponding devices and methods.

### BACKGROUND

The Digital Video Broadcast Handheld system (DVB-H) is a low-power derivative of the DVB Terrestrial transmission standard (DVB-T) standard that was developed to bring broadcast services available on a transport stream to wireless communication devices. In DVB-H, power consumption is reduced by implementing time-slicing, wherein the wireless communication device is active approximately 10-20% of the time.

In the DVB-H specification, the network sends several DVB-H signaling tables to DVB-H enabled wireless communication devices. The Program Association Table (PAT) and the Program Map Table (PMT) in DVB-H are based on the MPEG2 specification. The PAT and PMT are transmitted by the network every 100 ms. The PAT lists all programs available on the current transport stream and the corresponding Program Mapping Table (PMT) Packet Identifier (PID). The PAT is generally updated each time a program is modified. The Network Information Table (NIT) and IP/MAC Notification Table (INT) are DVB-H specific must be transmitted at least every 30 seconds. The INT provides, among other information, the IP addresses of the available services.

The DVB-T specification applies to devices such as set-top boxes for which power consumption is not a substantial concern. A DVB-T device thus listens to all Program Association Tables and when a change is detected in a PAT, all associated tables are read and the updated data are stored in the set-top box or other device. Updating the tables every time the Program Association Table (PAT) changes, provides the user with near immediate access to programs.

One essential function of the DVB-H stack in a DVB-H enabled wireless communication device is to identify the physical channel packet identifier (PID) and IP address for services and programs. In idle mode, the DVB-H engine is not activated but may be turned on and so needs to maintain synchronization with the signaling tables. In idle mode, a DVB-H enabled wireless communication device reads the Program Association Table (PAT) every 2 seconds and reads the IP/MAC Notification Table (INT) only when the PAT is updated. Thus when the PAT is updated, the DVB-H enabled wireless communication device may not read the INT for several seconds. For these and other reasons, there could be unacceptable latency between the time a user requests a DVB program and the availability of the program.

The various aspects, features and advantages of the disclosure will become more fully apparent to those having ordinary skill in the art upon careful consideration of the following Detailed Description thereof with the accompanying drawings described below. The drawings may have been simplified for clarity and are not necessarily drawn to scale.

### BRIEF DESCRIPTION OF THE DRAWINGS

FIG. 1 is a wireless digital video broadcast network.

FIG. 2 illustrates time sliced bursts including a program association table broadcast.

FIG. 3 is an exemplary modified program association table.

FIG. 4 is an illustrative DVB enable wireless device architecture.

### DETAILED DESCRIPTION

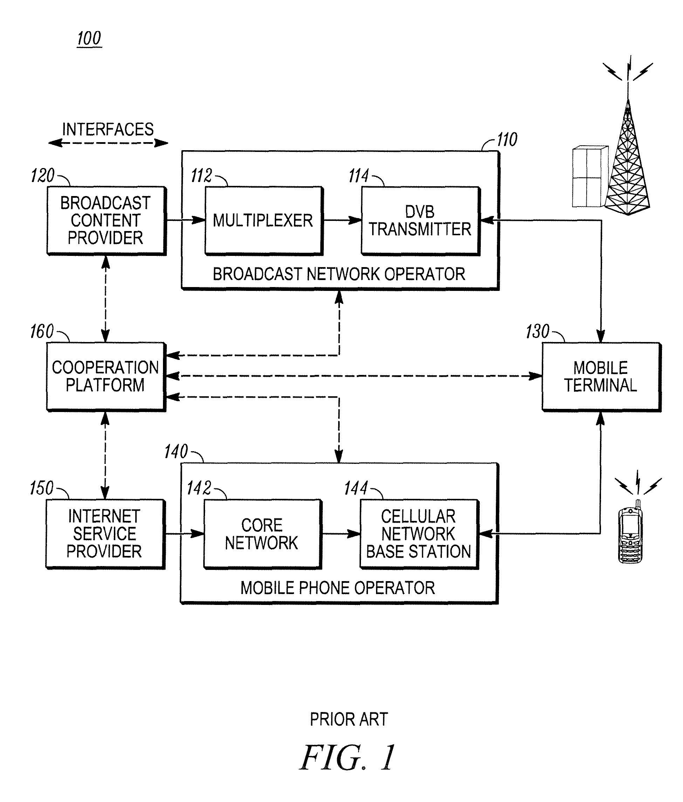

In FIG. 1, an illustrative wireless communication system 100 generally comprises a broadcast network 110 that broadcasts content provided by a content provider 120 to one or more wireless mobile terminals, for example, terminal 130. In one embodiment, the broadcast network is a unidirectional broadcast network, though more generally content may be communicated over a bi-directional network. The exemplary content broadcast network 110 includes a multiplexer 112 for multiplexing content received from the content server, and a transmitter 114. The transmitter is typically embodied as at least one primary transmitter and one or more synchronized repeaters situated on or near the edge of the primary transmitter's range. In some applications where content is transmitted to wireless devices, the transmitter transmits pursuant to the DVB-H protocol. These and other aspects of the broadcast network entity are discussed further below.

In FIG. 1, the illustrative system 100 includes a cellular communication network 140. The exemplary cellular communication network includes a core network 142 and a radio access network 144, which generally includes a base station controller and base transceiver stations. The cellular communication network is communicably coupled to an Internet Service Provider gateway. These and other aspects of cellular communication networks are known generally by those having ordinary skill in the art as discussed further below. Exemplary cellular communication networks include 3GPP and 3GPP2 based networks and future evolving wireless communication networks. In FIG. 1, a cooperation platform 160 communicably interconnects the broadcast network 110 and the cellular communication network 140. The cooperation platform enables the sharing and re-direction of content or data between the broadcast and communication network. Thus generally content may broadcast to a wireless communication device over with a broadcast network or over a communication network.

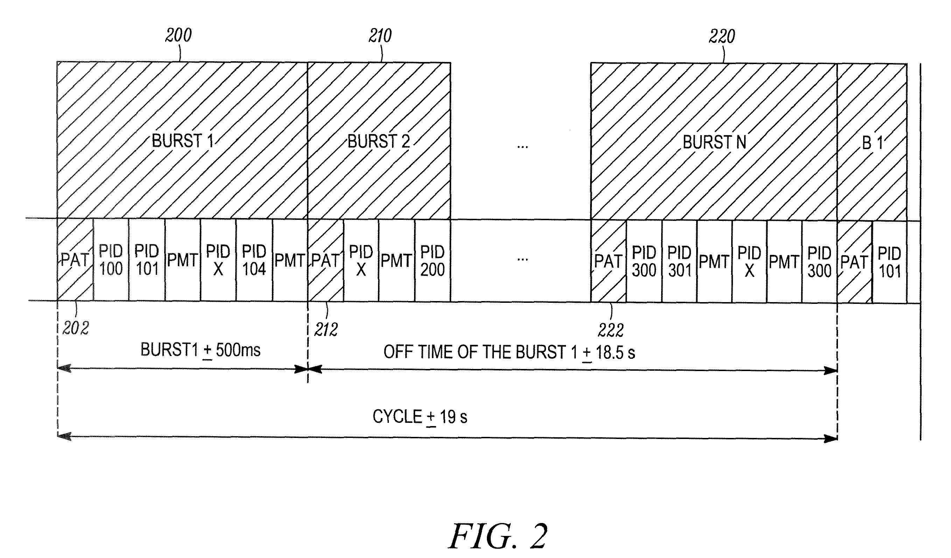

In FIG. 2, bursts 200, 210 ... are transmitted periodically pursuant to the DVB-H protocol. The bursts of FIG. 2 are illustrate adjacent to one another, which in reality the bursts are separated or spaced apart in time by some off interval dependent on the duty cycle. In FIG. 2, each burst includes a program association table (PAT), for example, PAT 202 in burst 200 and PAT 212 in burst 210. The PAT is transmitted at some interval, for example, at least once every 100 ms pursuant to the guidelines for DVB-H PSI/SI tables. The PAT lists all programs available on the current transport stream and the corresponding Program Mapping Table (PMT) Packet Identifier (PID). Since the PAT is generally updated only when a program is modified, many program association tables do not include any new information.

In one embodiment, the content broadcast network infrastructure entity provides advance notice in a PAT when a future or subsequent PAT will be updated. The Program Association Table (PAT) is generated by an entity within the content broadcast network infrastructure entity. In one embodiment, a first program association table scheduled for transmission at a first time includes information about a future or subsequent program association table that has been modified relative to the first program association table, wherein the other program association table is scheduled for transmission at a time later than the time for which the first program association table is scheduled for transmission. In FIG. 2, for example, the PAT 202 includes information indicating that subsequent PAT 222 in subsequent burst 220 has been modified. As noted, the program association table program also includes program and corresponding program mapping table packet identifier information.

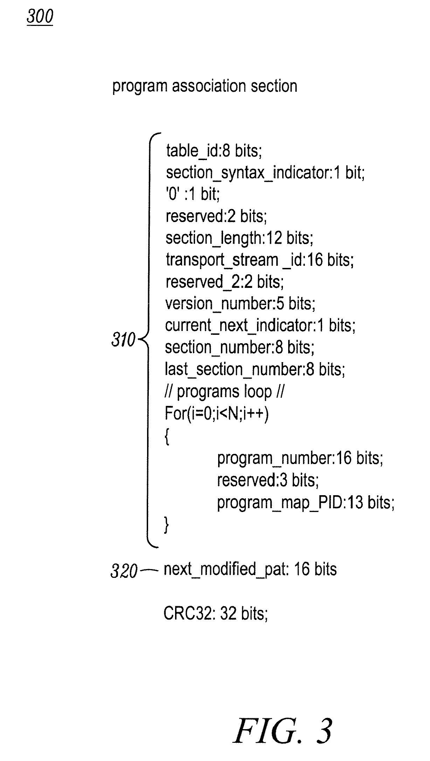

FIG. 3 illustrates a source code portion of an illustrative DVB-H program association table (PAT) 300 that provides information indicating when a future DVB-h PAT that has been modified will be transmitted. In FIG. 3, a first portion 310 of the DVB-H PAT includes information that is well known to those having ordinary skill in the art and is not discussed further herein. At 320, the "next_modified_pat" descriptor indicates when the next modified PAT will be transmitted, for example, by the broadcast network entity 110 in FIG. 1.

In one embodiment, for example, the "next_modified_pat" descriptor indicates the time between the current PAT transmission and the next modified PAT emission. The unit is proposed to be the period between 2 successive PAT tables. The new descriptor, next_modified_pat, allows knowing in how many tables the next change will occur. This compressed distribution such as 1, 2, 4, 8 etc... is coded on 16 bits. As the PAT tables are transmitted with regular period, the receiver knows in how many seconds it will receive the next modified table.

Upon receiving information indicating when a future program association table (PAT) that has been modified relative to the current PAT will be transmitted, a wireless device in idle mode may wake-up to receive only program association tables that have been modified. Accordingly, the wireless device operating in idle mode need not wakeup to listen to program association tables that do not contain any new information. The wireless communication device may thus save power that would otherwise be expended reading program association tables that have not been modified.

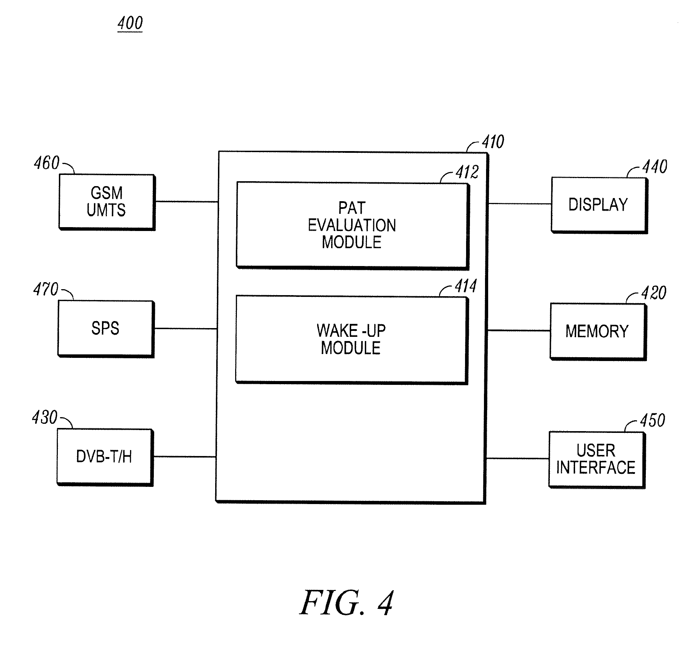

FIG. 4 illustrates a schematic block diagram of a wireless communication device 400. The illustrative device 400 comprises generally a processor 410 communicably coupled to memory 420, including RAM, ROM, cache and other memory device external or internal to the processor. The processor 410 is also communicably coupled to a receiver 430 capable of complying with the DVB-H and/or DVB-T protocols. In one embodiment, the DVB program association table (PAT) is received by the DVB receiver. The processor is also communicably coupled to a display device and a user interface. The user interface may include a keypad, a microphone, and an audio output among other inputs and outputs.

The device 400 also includes a two-way radio transceiver 460, for example, a 3GPP Universal Mobile Telecommunications System (UMTS) or a 3GPP2 or some other radio transceiver, though it need not necessarily be a cellular radio. The device may also include other transmitter and/or receivers, for example, Bluetooth, WLAN, infrared devices either alone or in combination with a cellular transceiver. In some embodiments, the DVB program association table (PAT) is received by the radio receiver. The exemplary device 400 also includes a satellite positioning system (SPS) receiver 470, for example, a NAVSTAR GPS receiver or a Galileo receiver or a GLONASS receiver. In other embodiments, however, the device does not include a transceiver other than the DVB receiver.

In FIG. 4, the digital video broadcast enabled wireless communication device processor 410 stores the program association table in memory 420. As noted above, the program association table generally includes program and corresponding program mapping table packet identifier information, and in some embodiments the program association table includes information about a subsequent program association table that has been modified but not yet received by the wireless communication device.

In one embodiment, in FIG. 4, the controller includes a program association table (PAT) evaluation module 412 that evaluates the PAT stored in memory to determine when the next modified PAT will be transmitted. The evaluation module reads the PAT and particularly the portion thereof, for example, the portion 320 in FIG. 3, indicating when the next modified PAT will be transmitted. In FIG. 4, the controller 410 also includes a wakeup module 414 that enables the receiver to receive a modified program association table, based on information in the program association table stored in memory. For example, when the device is operating in idle mode, the wakeup module activates the receiver only when necessary to receive program association tables that have been modified based on information in the program association table stored in memory. According to this mode of operation, it is not necessary for the device operating in idle mode to receive every scheduled PAT transmission.

While the present disclosure and the best modes thereof have been described in a manner establishing possession by the inventors and enabling those of ordinary skill in the art to make and use the same, it will be understood and appreciated that there are equivalents to the exemplary embodiments disclosed herein and that modifications and variations may be made thereto without departing from the scope and spirit of the inventions, which are to be limited not by the exemplary embodiments but by the appended claims.

## Claims

1. A method in a digital video broadcast enabled wireless communication device operating in idle mode, the method comprising:
receiving a digital video broadcast program association table,
the program association table including program and corresponding program mapping table packet identifier information,
providing information in the received program association table about a subsequent program association table that has been modified but not yet received by the wireless communication device.

2. The method of Claim 1, receiving a subsequent program association table, while operating in idle mode, only if the subsequent program association table has been modified.

3. The method of Claim 2, receiving the subsequent program association table, while operating in idle mode, based on the information provided in the received program association table about the subsequent program association table that has been modified but not yet received by the wireless communication device.

4. The method of Claim 2, not receiving subsequent program association tables, while operating idle mode, if the subsequent program association tables have not been modified.

5. The method of Claim 1, indicating in the received program association table when a subsequent program association table that has been modified will be transmitted for reception by the wireless communication device.

6. A digital video broadcast enabled wireless communication device, comprising:
a wireless receiver;
a processor communicably coupled to the wireless receiver;
a program association table stored in memory communicably coupled to the processor, the program association table including program and corresponding program mapping table packet identifier information,
the program association table including information about a subsequent program association table that has been modified but not yet received by the wireless communication device.

7. The device of Claim 6,
the controller configured to enable the receiver to receive a subsequent program association table, based on information in the program association table stored in memory, only if the subsequent program association table has been modified.

8. The device of Claim 6,
the controller configured to enable the receiver to receive, during operation of the device in idle mode, a subsequent program association table, based on information in the program association table stored in memory.

9. The device of Claim 8,
the controller configured to enable the receiver to receive, during operation of the device in idle mode, a subsequent program association table that has been modified without receiving, during operation of the device in idle mode, intervening program association tables that have not been modified.

10. The device of Claim 6,
the program association table including information indicating when the subsequent program association table that has been modified will be transmitted for reception by the wireless communication device.

11. The device of Claim 10,
the controller configured to enable the receiver to receive a subsequent program association table, based on information in the program association table stored in memory, only if the subsequent program association table has been modified.

12. The device of Claim 6, the wireless receiver is a digital video receiver.

13. A content wireless broadcast infrastructure entity, comprising:
a digital video broadcast program association table generating entity;
a first program association table generated by the program association table generating entity including program and corresponding program mapping table packet identifier information,
the first program association table including information about a subsequent program association table that has been modified relative to the first program association table.

14. The entity of Claim 13,
the first program association table scheduled for transmission before the subsequent program association entity.

15. The entity of Claim 14, a transmitter for periodically transmitting program association tables for reception by a wireless communication device.

16. The entity of Claim 13 is a digital video broadcast infrastructure entity.
